# EUROPEAN PATENT SPECIFICATION

(11) **EP 2 648 301 B1**
(45) Date of publication and mention of the grant of the patent: **04.05.2016**
(21) Application number: 12382130.8
(22) Date of filing: 02.04.2012
(51) Int. Cl.: H02H 7/06, H02J 3/42, H02P 9/04

(54) **Method of electrical protection of a synchronous machine and electric power generation plant for powering an electric network**
Verfahren zum elektrischen Schutz einer Synchronmaschine und Stromerzeugungsanlage zur Versorgung eines elektrischen Netzwerks
Procédé de protection électrique d'une machine synchrone et installation de génération d'énergie électrique pour alimenter un réseau électrique

(43) Date of publication of application: 09.10.2013
(73) Proprietor: Universidad Politécnica de Madrid, 28040 Madrid (ES)
(72) Inventor: Blánquez Delgado, Francisco, 28040 Madrid (ES); Rebollo López, Emilio, 28040 Madrid (ES); Granizo Arrabé, Ricardo, 28040 Madrid (ES); Platero Gaona, Carlos Antonio, 28040 Madrid (ES)
(74) Representative: ABG Patentes, S.L.

(56) References cited:
- GB-A- 2 205 207
- US-A- 5 390 068
- US-A1- 2010 010 684

## Description

### Object of the Invention

The present invention relates to a method of electrical protection of a synchronous machine, for example a generator, and an electric power generation plant for powering an electric network comprising an electrical protection for synchronising a synchronous machine to an electric network. The method of protection according to the invention establishes a period in which the electrical protection is active and also the instant in which said protection ceases to be active to offer the protection necessary and at the same time not prevent the correct increase of charge.

### Background of the Invention

Electric generators can be withdrawn from service for various reasons, such as the variation of charge, its own maintenance or emergency situations, among others. Each time putting a generator in service again is desired, it must be synchronised with the network before proceeding to close the switch. This synchronisation implies that the voltage in generator terminals has amplitude and frequency equal or similar to that of the network voltage in the connection point, as well as a practically null phase difference. The sequence of the three-phase voltage system of the generator must further be identical to that of the electric network.

An incorrect synchronisation operation can involve serious damage to the generator, to the turbine or to the main transformer, caused by the electric and mechanical surges created, as well as introducing serious disruptions in the network. The severity of the damage caused by closing the switch in out of synchronism conditions depends on the short-circuit current in the connection point with the power network and mainly on the phase difference between the network voltage and on the machine to be coupled. The greater this short-circuit current and the phase difference are, the greater the current which will flow through each phase of the generator will be.

Currently, coupling operations for coupling generators to the electric network can be performed manually or automatically by means of automatic synchronisers (see e.g. US 5 390 068). When the electric generator rotates with voltage in its terminals, the possible operating errors, the existence of faulty devices or even that the synchroniser is out of service, can close the group switch in out of synchronism conditions. Given that there is no specific protection function for the coupling process in current generator electrical protection systems, the surges caused by the coupling operations without synchronism conditions cannot be instantly cleared by any other existing protection function and the consequences can be very severe.

A protection function exists in the generator electrical protection systems referred to as 50/27, "Inadvertent energisation". Its purpose is to prevent the damage caused by closing the group switch when the synchronous machine is stopped and/or de-energised. When the group switch is closed while the generator is out of service, the latter starts working as an asynchronous motor. This operation causes an accelerated overheating of the rotor and can cause very severe mechanical damage to the turbine.

The 50/27 protection function is based on an instantaneous overcurrent protection which is active while the voltage in generator terminals is less than approximately 80%, such that in the event of detecting an overcurrent greater than a current threshold value (around 10% of the nominal intensity) while the voltage is less than the activation voltage threshold (the mentioned 80% for example), the protection function detects that the switch has been closed inadequately. When the voltage exceeds the deactivation voltage threshold of the described protection function, it is disabled after a time, therefore, in the event of coupling without synchronism conditions, the 50/27 function does not solve the problem.

Overcurrent protectors are not incorporated in electric power generation plants since, in the event of a short-circuit in the network, the plant has to keep supplying power without decoupling so that the overcurrent protection systems distributed throughout the network isolate the sections where the short-circuit is produced, maintaining service in the rest of the network.

The main technical problem which the invention solves is that of finding a specific protection function for the process of coupling synchronous machines to the electric network.

### Description of the Invention

The present invention solves the problem described above by means of a method of protection of a synchronous machine according to claim 1 and an electric power generation plant for powering an electric network according to claim 4.

A first inventive aspect is a method of electrical protection of a synchronous machine in synchronisation when said synchronous machine is coupled with an electric network, at least the following elements intervening in the synchronisation:
- mechanical driving means, preferably a turbine, connected to the synchronous machine through a movement drive shaft where this synchronous machine has a synchroniser and a voltage regulator,
- control means for controlling the mechanical driving means to regulate the amount of power delivered by the mechanical driving means,
- a switch for electrically connecting the synchronous machine and the electric network,
- an actuator suitable for opening the switch,
- a process control unit,
- measuring means for measuring the intensity delivered from the synchronous machine to the electric network arranged at least in one of the phases with an intensity reading signal output connected to the process control unit; and in turn, the process control unit has an output connected to the actuator to command opening the switch,
- detection means for detecting the closing of the switch the output of which is connected to the process control unit, where the synchronisation process for synchronising the synchronous machine to the electric network comprises the following steps carried out sequentially:
   i) activating the mechanical driving means with the switch open so that the synchronous machine reaches the nominal rotation speed,
   ii)powering the excitation winding of the synchronous machine by connecting its voltage regulator,
   iii) starting the synchroniser once the nominal voltage is reached in the armature of the synchronous machine such that once synchronism is reached, the synchroniser commands closing the switch.

The method of electrical protection acts on a system of synchronisation of a synchronous machine to an electric network. A method of synchronisation, as occurs in the state of the art, is performed in a scenario comprising elements such as a turbo type machine, which can be any type of turbine, which is controlled for example with water or water vapour the pressure of which controls the rotation speed of the turbine. The turbine transfers torque to the synchronous machine through a shaft. The synchronous machine comprises a synchroniser and a voltage regulator. The synchroniser acts such that when the machine and network voltages have the same amplitude, the same frequency and a practically null phase difference, it sends the command to close the group switch.

In the event of a fault of this synchroniser, or due to human error, the group switch can be closed in out of synchronism conditions. It is for this reason that a protection like that of the present invention is necessary.

To carry out the protection, the invention assures that the overcurrent protection is only active for a limited time period during the synchronisation and acts in the manner detailed below using the following elements: an actuator suitable for opening the switch, a process control unit, which can be processing means, measuring means for measuring the intensity delivered from the synchronous machine to the electric network arranged at least in one of the phases with an intensity reading signal output connected to the process control unit; and in turn, the process control unit has an output connected to the actuator to command opening the switch. Lastly there are detection means for detecting the closing of the switch which in one embodiment can be an intensity detector at the output of the synchronous machine or any closed switch detection means.

To assure that the technical problem considered is solved, the method of protection is characterised in that:
- steps a) to d) are additionally carried out by means of the process control unit:
   a) setting an adjustment intensity threshold value I_{SET} less than the value of the assigned intensity of the synchronous machine,
   b) providing overcurrent protection in at least the phase having measuring means for measuring the intensity and where this overcurrent protection is suitable for being activated and deactivated by means of the process control unit, and where it is further suitable for opening the switch when there is an overcurrent value greater than I_{SET} aborting the synchronisation process,
   c) assuring that the protection is active before the instant of closing the switch by means of the process control unit,
   d) once the closing of the switch is detected by the process control unit, determining a time T_{SET} verifying that, in a start-up process with intensity increase up to the nominal value without synchronisation faults, the intensity I_{SET} is reached in an instant T>T_{SET}, and where during the time interval T_{SET} overcurrent protection is maintained active, being deactivated once the instant T_{SET} is exceeded; and increasing the power in the mechanical driving means to reach the assigned intensity by means of regulating the control means for controlling the mechanical driving means.

Given that after closing the switch power starts to be transferred from the synchronous machine, the latter being controlled by the control means for controlling the mechanical driving means, for example water vapour, it is at this time when an overcurrent will occur in the event of there not being synchronism conditions. The critical moment is therefore the moment in which the closing of the automatic switch occurs. The invention maintains supervision during an limited time period T_{SET}. The presence of overcurrent protection cannot interfere in the start-up process which is carried out from the synchronism operation until the synchronous machine is delivering to the network a current value equal to its assigned value. The invention prevents the presence of the protection from interfering in this start-up process by deactivating the protection in an adequate instant of time. This instant of time is prior to the instant in which the increasing intensity in a normal start-up process reaches the current value at which the protection would act. If this were not so, the overcurrent protection would be triggered before reaching the assigned current value.

In the event of detecting current greater than I_{SET}, before an estimated time T_{SET} elapses after closing the automatic switch, the synchronisation operation is aborted by sending an opening command. In the event that this time T_{SET} has passed and no current greater than I_{SET} is detected, it is considered that the synchronisation has been performed correctly and the power increase process can be continued, increasing the power delivered to the network from the machine up to the assigned value. The protection is deactivated in the instant T_{SET} after closing the automatic switch since it is considered that the synchronisation is correct if the current of the machine does not exceed I_{SET} in this period.

The difference of this method of protection compared to the methods of protection of the state of the art is that it protects the machine only at the time of synchronisation. Therefore, if, for example, an overcurrent occurs due to a short-circuit in normal operating conditions in any point of the network, other means of protection would act without the protection of the invention intervening.

The present invention allows maintaining a synchronous machine in service even when there is a short-circuit in one point of the network since the protection which the invention uses is deactivated. Other means of protection will act, for example, isolating the point of the network where the short-circuit occurs.

A second inventive aspect is an electric power generation plant for powering an electric network comprising the following elements:
- synchronous machine comprising a synchroniser and a voltage regulator,
- mechanical driving means connected to the synchronous machine through a movement drive shaft,
- control means for controlling the mechanical driving means to regulate the amount of power delivered by the mechanical driving means,
- a switch for electrically connecting the synchronous machine and the electric network,
- an actuator suitable for opening the switch,
- a process control unit,
- measuring means for measuring the intensity delivered from the synchronous machine to the electric network arranged at least in one of the phases with an intensity reading signal output in communication with the process control unit; and in turn, the process control unit has an output in communication with the actuator to allow opening the switch,
- detection means for detecting the closing of the switch the output of which is connected to the process control unit,
characterised in that it additionally comprises an overcurrent protection in at least the phase having measuring means for measuring the intensity where:
- the protection is configured with a trigger intensity value I_{SET} less than the value of the nominal intensity of the synchronous machine,
- the protection is configured for being activated and deactivated by means of the process control unit, and in that the process control unit is suitable for carrying out a method according to steps c) and d) of the first inventive aspect.

The generation plant comprises elements configured such that the protection is calibrated to the value I_{SET} to set an intensity threshold value such that it triggers the group switch if this threshold is exceeded in an instant of time prior to that set by T_{SET} from closing the switch. The triggering and the triggering conditions are controlled by the process control unit. This process control unit does not necessarily have to be a programmable microprocessor but it can be configured by means of logic gates and a timer where the behaviour and design values (I_{SET}, T_{SET}) are set during the design of said process control unit.

### Description of the Drawings

These and other features and advantages of the invention will be more clearly understood from the following detailed description of a preferred embodiment, given only as an illustrative and non-limiting example with reference to the attached drawings.
Figure 1 shows a graph depicting the evolution of the intensities of the armature of a synchronous machine in the event of closing the switch in an out of synchronism instant.
Figure 2a and 2b are two comparative graphs showing the evolution of the rotation speed of the synchronous machine over time, the voltage in the winding of the machine and the current in one of the phases. Figure 2a shows an ideal start-up situation where the current at the time of closing the automatic switch is null; and Figure 2b shows a start-up out of synchronism conditions in which the described protection would act using a system according to the invention.
Figure 3 shows a schematic depiction of an embodiment of the invention of an electric power generation plant for powering an electric network.
Figure 4 shows a schematic depiction of an embodiment of the process control unit implemented by means of logic gates.

### Detailed Description of the Invention

The invention comprises a method of overcurrent protection of a synchronous machine (1) according to claim 1 and an electric power generation plant for powering an electric network (2) according to claim 4. The dependent claims describe particular embodiments of the invention.

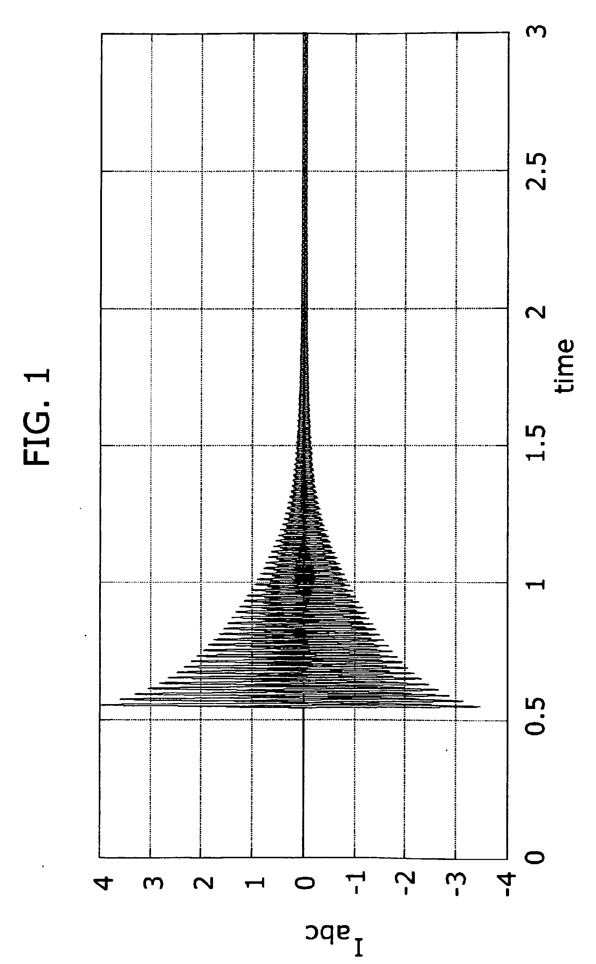

A case of closing of the switch in an out of synchronism instant can be seen in Figure 1. The intensities in the three phases after synchronisation with a phase difference of 50 degrees are depicted in the figure superimposed. Due to this phase difference, the synchronous machine suffers a surge giving rise to the overcurrent such as those shown in the graph. These overcurrents are greater the greater the phase difference at the time of closing the switch and are those which can give rise to irreparable damage both in windings and in mechanical elements since the driving means suffer torques also above the nominal values.

The present invention protects the elements of the plant and particularly the generator during the synchronisation process for synchronising to the network.

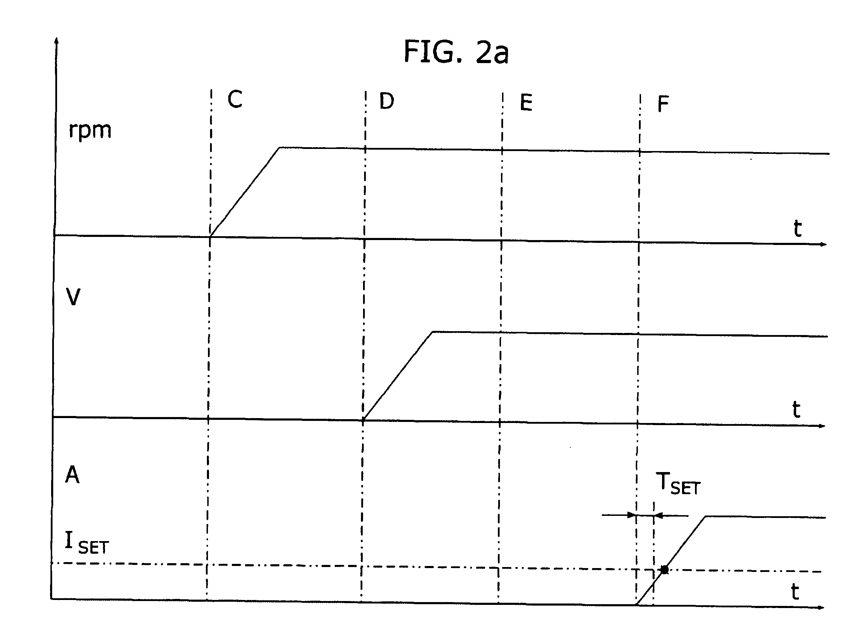

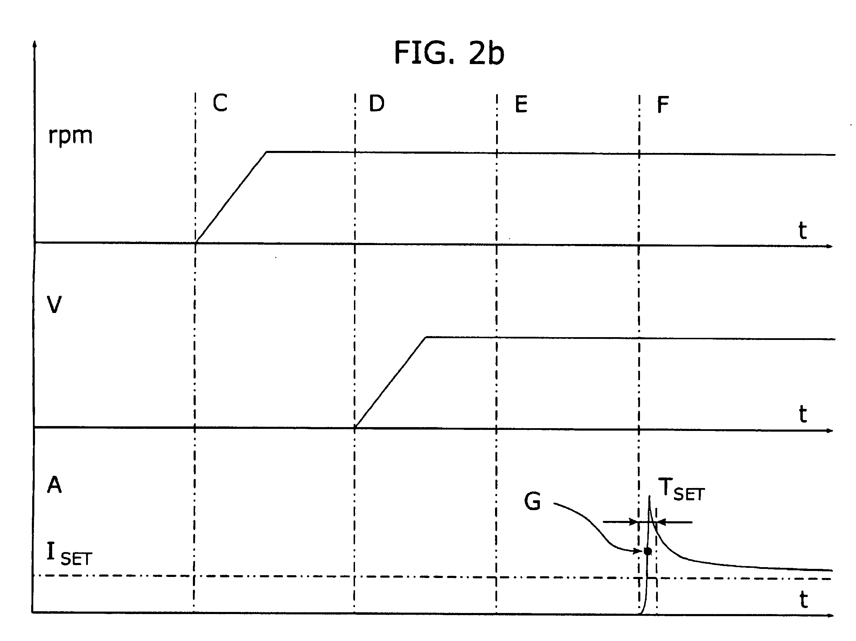

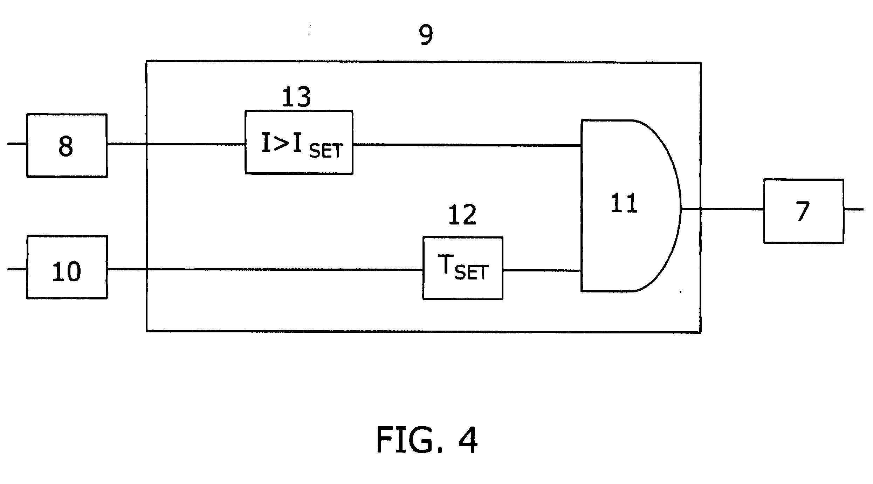

Two situations can be seen in Figures 2a and 2b: Figure 2a shows a case of ideal synchronisation with null phase difference and Figure 2b shows a case of synchronisation with a specific phase difference giving rise to overcurrents. When the synchronisation operation is done in phase the process follows the following steps:
- A turbine (3) starts to drive the rotor of the synchronous machine (Figure 2a) in the instant indicated in the graph as C.
- Once the nominal rotation speed (rpm) is reached, the voltage is increased in the phases of the synchronous machine (1) carrying out the control of the voltage through the voltage regulator (1.1) of the synchronous machine (1). It can be seen that the voltage in the synchronous machine has already reached the nominal value in the instant of time identified with the letter D.
- The synchronous machine (1) in this embodiment has a synchroniser (1.2) responsible for establishing the connection at the time in which said synchroniser considers that the voltage in the synchronous machine and in the network (2) have the same modulus and frequency and are further in phase (always taking into account specific tolerance threshold values). In the instant identified with the letter E, the synchroniser (1.2) is activated and waits to detect that the conditions for the synchronism are present.
- Once these conditions for the synchronism are detected the synchroniser (1.2) commands closing a switch (6). The instant in which the switch (6) is closed is identified with the letter F.
- In an instant of time prior to F an overcurrent protection suitable for opening the switch in case the current exceeds a pre-set threshold value I_{SET} less than the nominal intensity is activated.
- In the instant of closing the switch (6) a timer (12) (Figure 4) which measures a time T_{SET} is activated. After this time T_{SET} has passed the overcurrent protection is deactivated. The time period T_{SET} is such that in a start-up process with an progressive intensity increase up to the assigned value without synchronisation faults the intensity I_{SET} is reached in an instant T>T_{SET}.
- In this embodiment, after the instant F the user starts to increase the power delivered to the network (2) from the synchronous machine (1). If a current value greater than I_{SET} is not exceeded in a time less than T_{SET}, it is considered that the synchronisation has been correct and the power delivered to the network (2) continues to be increased gradually until reaching the nominal value. These synchronism conditions without overcurrent problems are the shown in Figure 2a.

In contrast, when synchronisation is not done in conditions of equal voltage, frequency and in phase, the evolution of the system is the same as that shown in Figure 2a up to instant F which is when the closing of the switch (6) occurs only that now, due to a fault, the modulus or the frequencies of the machine and the network voltages are not equal, or the phase difference is not null (2) and therefore overcurrents occur (Figure 2b).
- As has been described, the overcurrent protection suitable for opening the switch (6) in the event of the intensity exceeding a pre-set threshold value I_{SET} less than the assigned intensity has been activated before closing the switch (6).
- Likewise, a timer (12) (Figure 4) which measures a time T_{SET} is activated at the time of closing the switch (6) so that if the overcurrent protection has not acted when this instant T_{SET} has been reached, it is deactivated,.
- A high overcurrent exceeding the value of I_{SET} occurs in the first instants when the synchronous machine (1) is not in synchronism conditions. The graph shown in Figure 2b depicts a current peak which decreases over time. According to the invention, given that in the time interval T_{SET} the overcurrent protection is activated, it would be triggered by opening the automatic switch (6). The value of said overcurrent is greater the greater the phase difference between the synchronous machine and network voltages.

An intensity value (G) greater than I_{SET}, corresponding to an instant of time comprised in the interval T_{SET} is indicated in Figure 2b. This value (G) represents the point in which the overcurrent protection would be triggered, the value of the intensity passing to zero instead of following the curve shown in this figure.

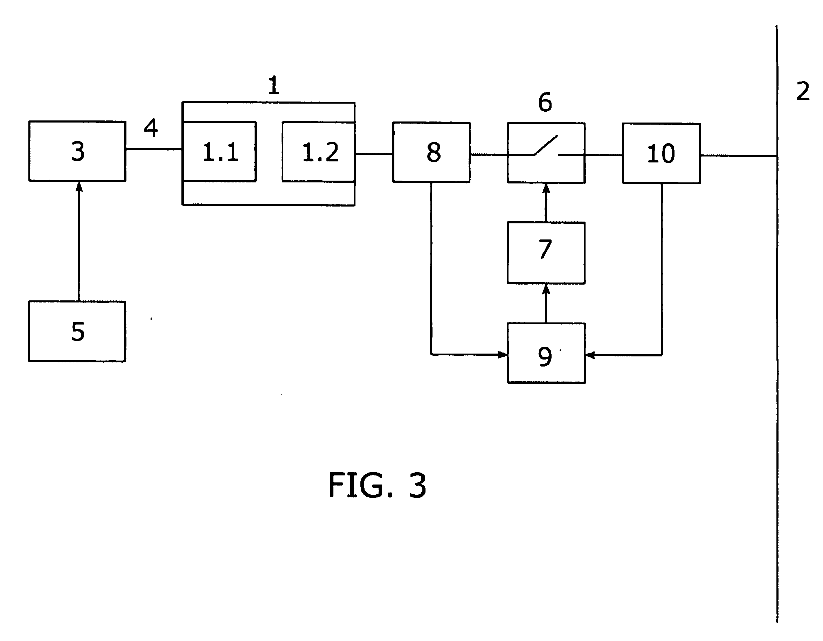

The elements which a plant implementing a method of protection according to an embodiment of the invention comprises are schematically shown in Figure 3.

In this embodiment there is a synchronous machine (1) which in turn has a synchroniser (1.1) and a voltage regulator (1.2). This synchronous machine (1) will provide electric power to the electric network (2).

In turn, the synchronous machine (1) is moved by mechanical driving means (3), preferably a turbine, connected to the synchronous machine (1) through a movement drive shaft (4). The synchronous machine (1) is responsible for transforming the mechanical power reaching it from the driving means (3) into electric power.

The synchronous machine has control means (5) for controlling the mechanical driving means (3) to regulate the mechanical power delivered by the mechanical driving means (3). These control means (5) are used for example to increase the active power set point delivered after closing the switch (6) up to the assigned values. In the event of the driving means (3) being a steam turbine, the control means (5) are means for regulating the entry of steam into the turbine.

A switch (6) is used for synchronising the synchronous machine (1) with the electric network (2) where in this embodiment the closing is carried out by means of an actuator (7) suitable for opening or closing said switch (6).

The plant according to this embodiment further comprises a process control unit (9), measuring means (8) for measuring the intensity delivered from the synchronous machine (1) to the electric network (2) arranged at least in one of the phases with an intensity reading signal output connected to the process control unit (9); where, in turn, the process control unit (9) has an output connected to the actuator (7) to command opening the switch (6).

The plant additionally comprises detection means (10) for detecting the closing of the switch (6) the output of which is connected to the process control unit (9). According to one embodiment, the process control unit (9) is a programmable unit which is suitable for carrying out the following steps:
a) setting an adjustment intensity value I_{SET} less than the value of the assigned intensity of the synchronous machine,
b) providing overcurrent protection in at least the phase having measuring means for measuring the intensity and where this overcurrent protection is suitable for being activated and deactivated by means of the process control unit, and where it is further suitable for opening the switch when there is an overcurrent value greater than I_{SET} aborting the synchronisation process,
c) assuring that the protection is active before closing the switch by means of the process control unit,
d) once the closing of the switch is detected by the process control unit a time T_{SET} is determined verifying that, in a start-up process with intensity increase up to the nominal value without synchronisation faults, the intensity I_{SET} is reached in an instant T>T_{SET}, and where during the time interval T_{SET} overcurrent protection is maintained active, being deactivated once the instant T_{SET} is exceeded; and increasing the set point power in the mechanical driving means to reach the nominal intensity by means of regulating the control means for controlling the mechanical driving means.

In another embodiment, the process control unit (9) is formed by a logic gate circuit the design of which gives rise to a circuit suitable for carrying out the steps described above.

In one embodiment, the overcurrent protection is an inverse time protection. The operation or triggering of the inverse time overcurrent protection is inversely related to the detected current intensity, that is, the greater the current intensity the faster the protection is activated. This has the technical advantage that the method is capable of protecting when there are greater intensities in a shorter time and there is therefore less damage in the synchronous machine (1). In one embodiment, this protection is carried out in an inverse time relay.

In one embodiment, the overcurrent protection is implemented by means of the process control unit (9). The overcurrent protection triggers the group switch (6) when a series of triggering conditions which depend on the detected level of intensity are met. This condition and action on the switch (6) are configured in a process control unit (9) the programming of which allows generating an output which acts on the actuator (7). This has the technical advantage of having a programmable unit the function of which is easily reprogrammable when triggering conditions change without having to physically modify any device.

In any of the embodiments, the overcurrent protection arranged in at least the phase having measuring means (8) for measuring the current thus verifies that:
- the protection is configured with a trigger intensity value I_{SET} less than the nominal intensity of the synchronous machine (1),
- the protection is configured for being activated and deactivated by means of the process control unit (9).

In one embodiment of the plant, the process control unit (9) is as shown in Figure 4, where said unit comprises processing means implemented as a set of logic gates where the inputs are
- the output of the detection means (10) for detecting the closing of the switch (6),
- the output of the measuring means (8) for measuring the intensity in at least one of the phases,
where the output towards the actuation means (7) is the logical product (AND) of the two following signals:
- the comparison of the signal coming from the measuring means (8) for measuring the intensity with a threshold I_{SET}; and,
- the signal coming from the detection means (10) for detecting the closing of the switch (6) delayed for a time T_{SET}.

This process control unit (9) is suitable so that the signal coming from the detection means (10) for detecting the closing of the switch (6) is logic 1 when the switch is open and zero when it is closed. If the switch (6) behaves inversely, then the process control unit (9) has an inverter before the input of the gate (AND).

## Claims

1. A method of electrical protection of a synchronous machine (1) in the synchronization when said synchronous machine (1) is coupled with an electric network (2), at least the following elements intervening in the synchronization:
• mechanical driving means (3), preferably a turbine, connected to the synchronous machine (1) through a movement drive shaft (4) where this synchronous machine (1) has a synchroniser (1.1) and a voltage regulator (1.2),
• control means (5) for controlling the mechanical driving means (3) to regulate the amount of power delivered by the mechanical driving means (3),
• a switch (6) for electrically connecting the synchronous machine (1) and the electric network (2),
• an actuator (7) suitable for opening the switch (6),
• a process control unit (9),
• measuring means (8) for measuring the intensity delivered from the synchronous machine (1) to the electric network (2) arranged at least in one of the phases with an intensity reading signal output connected to the process control unit (9); and in turn, the process control unit (9) has an output connected to the actuator (7) to command opening the switch (6),
• detection means (10) for detecting the closing of the switch (6) the output of which is connected to the process control unit (9),
where the synchronisation process for synchronising the synchronous machine (1) to the electric network (2) comprises the following steps carried out sequentially:
i) activating the mechanical driving means (3) with the switch (6) open so that the synchronous machine (1) reaches the nominal rotation speed,
ii) powering the excitation winding of the synchronous machine (1) by connecting its voltage regulator (1.2),
iii) starting the synchroniser (1.1) once the nominal voltage is reached in the armature of the synchronous machine (1) such that once synchronism is reached, the synchroniser (1.1) commands closing the switch (6),
**characterised in that** steps a) to d) are additionally carried out by means of the process control unit (9):
a) setting an adjustment intensity threshold value I_{SET} less than the value of the assigned intensity of the synchronous machine (1),
b) providing overcurrent protection in at least the phase having measuring means (8) for measuring the intensity and where this overcurrent protection is suitable for being activated and deactivated by means of the process control unit (9), and where it is further suitable for opening the switch (6) when there is an overcurrent value greater than I_{SET} aborting the synchronisation process,
c) assuring that the protection is active before the instant of closing the switch (6) by means of the process control unit (9),
d) once the closing of the switch (6) is detected by the process control unit (9), determining a time T_{SET} verifying that, in a start-up process with intensity increase up to the nominal value without synchronisation faults, the intensity I_{SET} is reached in an instant T>T_{SET}, and where during the time interval T_{SET} overcurrent protection is maintained active, being deactivated once the instant T_{SET} is exceeded; and, increasing the power in the mechanical driving means to reach the assigned intensity by means of regulating the control means (5) for controlling the mechanical driving means (3).

2. The method according to claim 1, **characterised in that** the overcurrent protection is an inverse time protection.

3. The method according to claims 1 or 2, **characterised in that** the overcurrent protection is implemented by means of the process control unit (9).

4. An electric power generation plant for powering an electric network (2) comprising the following elements:
• synchronous machine (1) comprising a synchroniser (1.1) and a voltage regulator (1.2),
• mechanical driving means (3) connected to the synchronous machine (1) through a movement drive shaft (4),
• control means (5) for controlling the mechanical driving means (3) to regulate the amount of power delivered by the mechanical driving means (3),
• a switch (6) for electrically connecting the synchronous machine (1) and the electric network (2),
• an actuator (7) suitable for opening the switch (6),
• a process control unit (9),
• measuring means (8) for measuring the intensity delivered from the synchronous machine (1) to the electric network (2) arranged at least in one of the phases with an intensity reading signal output in communication with the process control unit (9); and in turn, the process control unit (9) has an output in communication with the actuator (7) to allow opening the switch (6),
• detection means (10) for detecting the closing of the switch (6) the output of which is connected to the process control unit (9),
**characterised in that** it additionally comprises an overcurrent protection in at least the phase having measuring means (8) for measuring the intensity where:
• the protection is configured with a trigger intensity value I_{SET} less than the value of the assigned intensity of the synchronous machine (1),
• the protection is configured for being activated and deactivated by means of the process control unit (9),
and **in that** the process control unit (9) is suitable for carrying out a method according to steps c) and d) of claim 1.

5. The plant according to claim 4, **characterised in that** the overcurrent protection is an inverse time protection.

6. The plant according to claims 4 or 5, **characterised in that** the process control unit (9) is suitable for carrying out the overcurrent protection function.

7. The plant according to any of claims 4 to 6, **characterised in that** the process control unit (9) comprises processing means implemented as a set of logic gates where the inputs are:
• the output of the detection means (10) for detecting the closing of the switch (6),
• the output of the measuring means (8) for measuring the intensity in at least one of the phases,
where the output towards the actuation means (7) is the logical product (AND) of two signals:
• the comparison of the signal coming from the measuring means (8) for measuring the intensity with a threshold I_{SET}; and,
• the signal coming from the detection means (10) for detecting the closing of the switch (6) delayed for a time T_{SET}.

## Patentansprüche

1. Verfahren zum elektrischen Schützen einer Synchronmaschine (1) in der Synchronisation, wenn die Synchronmaschine (1) mit einem elektrischen Netz (2) gekoppelt ist, zumindest die folgenden Elemente treten in der Synchronisation auf:
- mechanische Antriebsmittel (3), vorzugsweise eine Turbine, die mit der Synchronmaschine (1) durch einen Bewegungsantriebsschaft (4) verbunden ist, wobei die Synchronmaschine (1) einen Synchronisator (1.1) und einen Spannungsregler (1.2) aufweist,
- Steuermittel (5) zum Steuern der mechanischen Antriebsmittel (3), um den Wert der von den mechanischen Antriebsmitteln (3) gelieferten Leistung zu regeln,
- einen Schalter (6) zum elektrischen Verbinden der Synchronmaschine (1) mit dem elektrischen Netz (2),
- ein Aktuator (7), der zum Öffnen des Schalters (6) geeignet ist,
- eine Prozesssteuereinheit (9),
- Messmittel (8) zum Messen der von der Synchronmaschine (1) an das elektrische Netz (2) gelieferten Intensität, die mindestens in einer der Phasen angeordnet sind, mit einem Intensitätslesesignalausgang, der mit der Prozesssteuereinheit (9) verbunden ist; die Prozesssteuereinheit (9) weist wiederum einen mit dem Aktuator (7) verbundenen Ausgang auf, um das Öffnen des Schalters (6) zu befehligen,
- Erfassungsmittel (10) zum Erfassen des Schließens des Schalters (6), deren Ausgang mit der Prozesssteuereinheit (9) verbunden ist,
wobei der Synchronisationsprozess zum Synchronisieren der Synchronmaschine (1) mit dem elektrischen Netz (2) die folgenden nacheinander ausgeführten Schritte aufweist:
i) Aktivieren der mechanischen Antriebsmittel (3) mit dem geöffneten Schalter (6), sodass die Synchronmaschine (1) die Nominalrotationsgeschwindigkeit erreicht,
ii) Bestromen der Erregerwicklung der Synchronmaschine (1) durch Verbinden ihres Spannungsreglers (1.2),
iii) Starten des Synchronisators (1.1) sobald die Nominalspannung in der Armatur der Synchronmaschine (1) erreicht wird, sodass, sobald Synchronisation erreicht ist, der Synchronisators (1.1) das Schließen des Schalters (6) befehligt, **dadurch gekennzeichnet, dass** Schritte a) bis d) zusätzlich mittels der Prozesssteuereinheit (9) durchgeführt werden:
a) Setzen eines Ausgleichsintensitätsschwellwerts I_{SET} kleiner als der Wert der zugeteilten Intensität der Synchronmaschine (1),
b) Bereitstellen eines Überstromschutzes zumindest in der Phase, die das Messmittel (8) zum Messen der Intensität aufweist, und wobei dieser Überstromschutz geeignet ist, um mittels der Prozesssteuereinheit (9) aktiviert und deaktiviert zu werden, und wobei er ferner zum Öffnen des Schalters (6) geeignet ist, wenn ein Überstromwert größer als I_{SET} auftritt, was zum Abbruch des Synchronisationsprozesses führt,
c) Sicherstellen das der Schutz aktiv ist vor dem Zeitpunkt des Schließens des Schalters (6) mittels der Prozesssteuereinheit (9),
d) sobald das Schließen des Schalters (6) von der Prozesssteuereinheit (9) erfasst wird, Bestimmen einer Zeit T_{SET}, die nachprüft, dass, in einem Anlaufprozess mit einem Intensitätszuwachs bis zu dem Nominalwert ohne Synchronisationsfehler, die Intensität I_{SET} zu einem Zeitpunkt T > T_{SET} erreicht ist, und wobei während dem Zeitintervall T_{SET} der Überstromschutz aktiv gehalten wird, und deaktiviert wird, sobald der Zeitpunkt T_{SET} überschritten wird; und, Erhöhen der Leistung in den mechanischen Antriebsmitteln, um die zugeteilten Intensität mittels Regeln der Steuermittel (5) zum Steuern der mechanischen Antriebsmittel (3) zu erreichen.

2. Verfahren nach Anspruch 1, **dadurch gekennzeichnet, dass** der Überstromschutz ein inverser Zeitschutz ist.

3. Verfahren nach Anspruch 1 oder 2, **dadurch gekennzeichnet, dass** der Überstromschutz mittels der Prozesssteuereinheit (9) implementiert ist.

4. Elektrisches Stromerzeugungskraftwerk zum Einspeisen elektrischer Energie in ein elektrisches Netz (2), umfassend die folgenden Elemente:
- Synchronmaschine (1) umfassend einen Synchronisator (1.1) und einen Spannungsregler (1.2),
- mechanische Antriebsmittel (3), die mit der Synchronmaschine (1) durch einen Bewegungsantriebsschaft (4) verbunden ist,
- Steuermittel (5) zum Steuern der mechanischen Antriebsmittel (3), um den Wert der von den mechanischen Antriebsmitteln (3) gelieferten Leistung zu regeln,
- einen Schalter (6) zum elektrischen Verbinden der Synchronmaschine (1) mit dem elektrischen Netz (2),
- ein Aktuator (7), der zum Öffnen des Schalters (6) geeignet ist,
- eine Prozesssteuereinheit (9),
- Messmittel (8) zum Messen der von der Synchronmaschine (1) an das elektrische Netz (2) gelieferten Intensität, die mindestens in einer der Phasen angeordnet sind, mit einem Intensitätslesesignalausgang, der mit der Prozesssteuereinheit (9) verbunden ist; die Prozesssteuereinheit (9) weist wiederum einen mit dem Aktuator (7) verbundenen Ausgang auf, um das Öffnen des Schalters (6) zu befehligen,
- Erfassungsmittel (10) zum Erfassen des Schließens des Schalters (6), deren Ausgang mit der Prozesssteuereinheit (9) verbunden ist,
**dadurch gekennzeichnet, dass** es zusätzlich einen Überstromschutz zumindest in der Phase, die das Messmittel (8) zum Messen der Intensität aufweist, umfasst, wobei:
- der Schutz mit einem Auslöserintensitätswert I_{SET} kleiner als der Wert der zugeteilten Intensität der Synchronmaschine (1) konfiguriert ist,
- der Schutz konfiguriert ist, um mittels der Prozesssteuereinheit (9) aktiviert und deaktiviert zu werden,
und dadurch, dass die Prozesssteuereinheit (9) geeignet ist, ein Verfahren gemäß der Schritte c) und d) von Anspruch 1 auszuführen.

5. Kraftwerk nach Anspruch 4, **dadurch gekennzeichnet, dass** der Überstromschutz ein inverser Zeitschutz ist.

6. Kraftwerk nach Anspruch 4 oder 5, **dadurch gekennzeichnet, dass** die Prozesssteuereinheit (9) zum Ausführen der Überstromschutzfunktion geeignet ist.

7. Kraftwerk nach einem der Ansprüche 4 bis 6, **dadurch gekennzeichnet, dass** die Prozesssteuereinheit (9) Verarbeitungsmittel umfasst, die als ein Satz von logischen Gatter implementiert sind, wobei die Eingänge sind:
- der Ausgang der Erfassungsmittel (10) zum Erfassen des Schließens des Schalters (6),
- der Ausgang der Messmittel (8) zum Messen der Intensität in mindestens einer der Phasen,
wobei der Ausgang in Richtung der Aktuatormittel (7) das logische Produkt (UND) von zwei Signalen ist:
- der Vergleich der Signale von den Messmitteln (8) zum Messen der Intensität mit einem Schwellwert I_{SET}, und,
- das Signal von den Erfassungsmitteln (10) zum Erfassen des Schließens des Schalters (6) verzögert für eine Zeit T_{SET}.

## Revendications

1. Procédé de protection électrique d'une machine synchrone (1) pendant la synchronisation lorsque ladite machine synchrone (1) est couplée à un réseau électrique (2), au moins les éléments suivants intervenant dans la synchronisation :
• des moyens d'entraînement mécanique (3), de préférence une turbine, reliés à la machine synchrone (1) par un arbre d'entraînement de mouvement (4), cette machine synchrone (1) ayant un synchroniseur (1.1) et un régulateur de tension (1.2),
• des moyens de commande (5) pour commander les moyens d'entraînement mécanique (3) afin de réguler la quantité de puissance délivrée par les moyens d'entraînement mécanique (3),
• un commutateur (6) pour relier électriquement la machine synchrone (1) et le réseau électrique (2),
• un actionneur (7) approprié pour ouvrir le commutateur (6),
• une unité de commande de processus (9),
• des moyens de mesure (8) pour mesurer l'intensité délivrée au réseau électrique (2) à partir de la machine synchrone (1), disposés au moins dans l'une des phases avec une sortie de signal de lecture d'intensité reliée à l'unité de commande de processus (9), et à son tour, l'unité de commande de processus (9) a une sortie reliée à l'actionneur (7) pour commander l'ouverture du commutateur (6),
• des moyens de détection (10) pour détecter la fermeture du commutateur (6) dont la sortie est reliée à l'unité de commande de processus (9),
dans lequel le processus de synchronisation destiné à synchroniser la machine synchrone (1) sur le réseau électrique (2) comprend les étapes suivantes exécutées séquentiellement :
i) activer les moyens d'entraînement mécanique (3) avec le commutateur (6) ouvert de sorte que la machine synchrone (1) atteint la vitesse de rotation nominale,
ii) alimenter l'enroulement d'excitation de la machine synchrone (1) en connectant son régulateur de tension (1.2),
iii) démarrer le synchroniseur (1.1) une fois que la tension nominale est atteinte dans l'armature de la machine synchrone (1) de telle sorte qu'une fois que le synchronisme est atteint, le synchroniseur (1.1) commande la fermeture du commutateur (6),
**caractérisé en ce que** de plus, les étapes a) à d) sont exécutées au moyen de l'unité de commande de processus (9) :
a) fixer une valeur de seuil d'intensité de réglage I_{SET} inférieure à la valeur de l'intensité assignée de la machine synchrone (1),
b) assurer une protection contre les surintensités dans au moins la phase ayant les moyens de mesure (8) destinés à mesurer l'intensité et où cette protection contre les surintensités est appropriée pour être activée et désactivée au moyen de l'unité de commande de processus (9), et où elle est également appropriée pour ouvrir le commutateur (6) lorsqu'il y a une valeur de surintensité supérieure à I_{SET} en abandonnant le processus de synchronisation,
c) s'assurer que la protection est active avant l'instant de fermeture du commutateur (6) au moyen de l'unité de commande de processus (9),
d) une fois que la fermeture du commutateur (6) est détectée par l'unité de commande de processus (9), déterminer un temps T_{SET} qui vérifie que, pendant un processus de démarrage avec une augmentation d'intensité jusqu'à la valeur nominale sans défaut de synchronisation, l'intensité I_{SET} est atteinte à un instant T > T_{SET}, et où pendant l'intervalle de temps T_{SET}, la protection contre les surintensités est maintenue active, en étant désactivée une fois que l'instant T_{SET} est dépassé, et, augmenter la puissance dans les moyens d'entraînement mécanique pour atteindre l'intensité assignée au moyen de la régulation des moyens de commande (5) pour commander les moyens d'entraînement mécanique (3).

2. Procédé selon la revendication 1, **caractérisé en ce que** la protection contre les surintensités est une protection à temporisation inverse.

3. Procédé selon les revendications 1 ou 2, **caractérisé en ce que** la protection contre les surintensités est mise en oeuvre au moyen de l'unité de commande de processus (9).

4. Installation de production d'énergie électrique pour alimenter un réseau électrique (2), comprenant les éléments suivants :
• une machine synchrone (1) comprenant un synchroniseur (1.1) et un régulateur de tension (1.2),
• des moyens d'entraînement mécanique (3) reliés à la machine synchrone (1) par un arbre d'entraînement de mouvement (4),
• des moyens de commande (5) pour commander les moyens d'entraînement mécanique (3) afin de réguler la quantité de puissance délivrée par les moyens d'entraînement mécanique (3),
• un commutateur (6) pour relier électriquement la machine synchrone (1) et le réseau électrique (2),
• un actionneur (7) approprié pour ouvrir le commutateur (6),
• une unité de commande de processus (9),
• des moyens de mesure (8) pour mesurer l'intensité délivrée au réseau électrique (2) à partir de la machine synchrone (1), disposés dans au moins l'une des phases avec une sortie de signal de lecture d'intensité en communication avec l'unité de commande de processus (9), et à son tour, l'unité de commande de processus (9) a une sortie en communication avec l'actionneur (7) pour permettre l'ouverture du commutateur (6),
• des moyens de détection (10) pour détecter la fermeture du commutateur (6) dont la sortie est reliée à l'unité de commande de processus (9),
**caractérisée en ce qu'**elle comprend de plus une protection contre les surintensités dans au moins la phase ayant les moyens de mesure (8) pour mesurer l'intensité où :
• la protection est configurée avec une valeur d'intensité de déclenchement I_{SET} inférieure à la valeur de l'intensité assignée de la machine synchrone (1),
• la protection est configurée pour être activée et désactivée au moyen de l'unité de commande de processus (9),
et **en ce que** l'unité de commande de processus (9) est appropriée pour mettre en oeuvre un procédé selon les étapes c) et d) de la revendication 1.

5. Installation selon la revendication 4, **caractérisée en ce que** la protection contre les surintensités est une protection à temporisation inverse.

6. Installation selon les revendications 4 ou 5, **caractérisée en ce que** l'unité de commande de processus (9) est appropriée pour mettre en oeuvre la fonction de protection contre les surintensités.

7. Installation selon l'une quelconque des revendications 4 à 6, **caractérisée en ce que** l'unité de commande de processus (9) comprend des moyens de traitement mis en oeuvre sous la forme d'un ensemble de portes logiques où les entrées sont:
• la sortie des moyens de détection (10) pour détecter la fermeture du commutateur (6),
• la sortie des moyens de mesure (8) pour mesurer l'intensité dans au moins l'une des phases,
où la sortie vers les moyens d'actionnement (7) est le produit logique (ET) de deux signaux :
• la comparaison du signal provenant des moyens de mesure (8) pour mesurer l'intensité avec un seuil I_{SET}, et,
• le signal provenant des moyens de détection (10) pour détecter la fermeture du commutateur (6) retardé pendant un temps T_{SET}.
